# EUROPEAN PATENT APPLICATION

(11) **EP 1 990 585 A1**
(43) Date of publication of application: **12.11.2008**
(21) Application number: 07251912.7
(22) Date of filing: 09.05.2007
(51) Int. Cl.: F24J 2/04, F24J 2/52

(54) **Solar roof tile mounting adaptor**

(71) Applicant: Solar Century Holdings Limited, London SE1 7AB (GB)
(72) Inventor: Giral, Juan Jose, London SE1 7AB (GB); Tooley, Mark John, Cambridge CB22 7QR (GB); Burgess, Matthew James, London E7 0HF (GB)
(74) Representative: Atkinson, Ralph

(57) **Abstract**

An adaptor 20 for mounting a solar thermal collector system on a pitched roof. The adaptor 20 enables the solar thermal collector, or assembly of collectors, to be interlocked with surrounding rows of roof tiles or slates in such a way as to maintain the inherently weather-tight overlapping structure, whilst maintaining the solar collectors flush with the roof surface. The adaptor 20 has an "overlapping" flange 22 along one side edge, and an "underlapping" flange 24 along the opposite side edge to allow the adaptor to mate with either a right hand or left hand end of a solar collector assembly. The adaptor 20 comprises a depression 26 for receiving downwardly dependent edges of part-cylindrical or part-conical tiles. The adaptor 20 can include a toothed flange 34, 42 to allow water drainage and to prevent animals from nesting under the adaptor 20 when installed.

## Description

This invention relates to solar energy collectors adapted to be mounted on pitched roofs, and in particular, to adaptors useful for installing solar collectors which are formed as modules designed to be fitted on pitched roofs covered with slates or tiles. The invention also relates to a method of installing the same.

The individual solar collectors may be in the form of photovoltaic elements, or thermal collectors of the type which circulate a heat-exchange fluid such as water. In the following description, the invention will be described with reference to the latter type of collector, hereinafter referred to as a "solar thermal collector", although it will be understood that the invention is equally applicable to any other type of solar collector adapted to be mounted on roofs.

It is a common problem with solar energy collection devices that, when they are mounted on roofs, the structure must be kept weather-tight. Particularly in the case of solar thermal collectors, this can be difficult because of the need to incorporate pipework which passes through the weather-tight surface. In addition, for aesthetic reasons, it is desirable for the solar collector assembly to be tightly integrated with the roof, and preferably, not to project excessively above the surface. Accordingly, one known type of solar thermal roof tile assembly is designed to be substituted for a group of roof tiles, somewhat in the manner of a "roof window", rather than being mounted above the surface. It is then necessary to ensure that a weather-tight seal can be formed all round the assembly.

Conventionally, of course, this can be done with flashings of the type used with roof windows. However, depending on the size of the assembly, the exact structure of the roof and the type of tiles or slates involved, such flashings may have to be tailor-made for each application. In practice, this can entail the employment of additional skilled tradesmen and cause significant further delays and extra costs, to enable the installation to be completed in a satisfactory manner.

Accordingly, the present invention seeks to provide an adaptor arrangement for mounting a solar thermal collector system on a pitched roof, which enables the solar thermal collector, or assembly of collectors, to be interlocked with surrounding rows of roof tiles or slates in such a way as to maintain the inherently weather-tight overlapping structure, whilst maintaining the solar collectors flush with the roof surface.

According to a first aspect of the invention there is provided a mounting adaptor for a solar thermal collector of the type which is designed to be substituted for a roof tile or tiles, the adaptor comprising an interlocking rectangular body whose dimension in the direction of a roof pitch corresponds to a pitch dimension of the roof tile, the body being provided with complementary flanges on its opposite lateral side edges adapted to mate with corresponding flanges on opposite side edges of the solar thermal collector, or on another similar adaptor, and also incorporating a central recessed region adapted to receive the downwardly dependent edge of an adjacent non-flanged type of roof tile so as to form a weather-tight bridge between the tile and the collector.

It will be understood that the solar thermal collector may be a unit which is designed to replace, or be substituted for, a number of adjacent roof tiles extending preferably in a horizontal direction. Such a collector is typically installed in a roof with a number of similar collectors occupying positions above and below it, so that the whole assembly may, for example, be substituted for four or five adjacent rows of four or more roof tiles. Consequently, in a typical installation, four or five adaptors will be required along each side of the assembly. It will also be necessary to provide a corresponding weather-tight seal along the upper and lower edges of the assembly. Accordingly, therefore, the adaptor of the present invention is preferably provided with suitable formations on its upper and lower edges (relative to the pitch direction) whereby its upper edge can cooperate with the lower edge of a solar thermal collector so as to form a weather-tight seal. The shape of a central region of the adaptor is also preferably such that the next lower row of tiles can cooperate with it in such a way as to interlock with the rest of the roof structure. Similarly, the lower edge of the adaptor is preferably shaped so as to overlap the upper edge of the solar thermal collector assembly, and to provide a suitable support for the next row of tiles above the collector assembly.

In some cases, such as roofs constructed from so-called "Spanish" tiles, each individual tile comprises a part cylindrical member or "conic section", and alternate tiles in each row are arranged with the convex and concave surfaces alternating, and the edges of the tiles overlapping. Consequently, it is difficult to construct a weather-tight seal between the adjacent edges of a tile and a solar thermal collector having a conventional flanged edge. Preferably, therefore, the central region of the adaptor of the present invention comprises a corresponding part cylindrical or conic region which forms a recess, so that the adaptor can be used to "bridge" between the edge of the thermal collector, and the adjacent edge of a roof tile, by allowing the edge to engage in the recess.

According to a second aspect of the invention there is provided a solar thermal collector module comprising a solar thermal collector and an adaptor.

According to a third aspect of the invention there is provided a method of installing a solar thermal collector module on a pitched roof comprising installing a solar thermal collector on the roof and mating an adaptor therewith.

One embodiment of the invention will now be described, by way of example, with reference to the accompanying drawings in which
Figure 1 is a partly broken-away perspective view of a roof assembly including solar thermal collectors;
Figure 2 is a perspective view of an individual mounting adaptor according to the present invention;
Figure 3 is a plan view of the adaptor of Figure 2;
Figure 4 is an underneath perspective view of the adaptor of Figure 2;
Figure 5 is an underneath plan view of the adaptor of Figure 2;
Figure 6 is a transverse vertical cross-section of the adaptor of Figure 2;
Figure 7 is a plan view of the roof assembly of Figure 1;
Figure 8 is a lower end view of the assembly of Figure 7, seen in a direction parallel to the roof surface;
Figure 9 is a vertical cross-section through the roof assembly of Figure 7;
Figure 10 is an enlarged view of the junction detail encircled in Figure 8;
Figure 11 is an enlarged perspective view corresponding to the detail of Figure 1;
Figure 12 is a perspective view of two stacked mounting adaptors according to the present invention;
Figure 13 is an underneath perspective view of the stacked adaptors of Figure 12; and
Figure 14 is an above and underneath perspective view of an adaptor having upwardly projecting teeth.

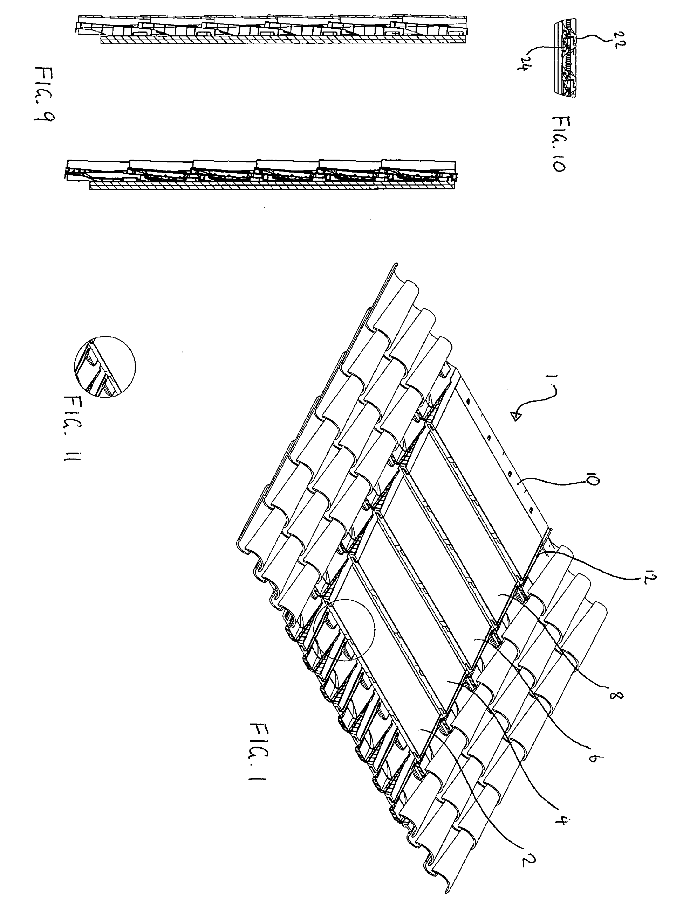

Referring to the drawings, Figure 1 illustrates a solar energy module arrangement 1 in which a number of solar thermal roof tile collector assemblies 2, 4, 6, 8, are integrated into a roof consisting of "Spanish" tiles. Each solar thermal collector comprises an elongate body whose width is equivalent to the width of a number of adjacent roof tiles, so that the collector can be substituted for that number of tiles in a given row. Although not shown in detail, it will be appreciated that each collector is provided with a flanged upper edge 10 so that successive rows in the upward direction overlap each other to provide a weather-tight joint. Similarly, one lateral side edge 12 is formed with an "overlapping" flange so as to cooperate with a mating formation on an adjacent roof tile or collector, whilst the other lateral edge, not shown, is formed with a corresponding "underlapping" flange so as to cooperate with an adjacent tile or collector at that side of the structure.

As shown, the flanged edges of the collectors are adapted to cooperate with certain standard types of "pre-cast" roof tiles, which have similar flanged edges. However, there are quite a number of other types of tiles in common use, such as "clay" or "Spanish" tiles. These are simply part cylindrical or part conical "shell" structures, and rather than having cooperating flanged edges they are simply arranged with alternate tiles having their convex or concave surface facing upwardly, so that the downwardly dependent edge of one tile can overlap the upwardly projecting edge of an adjacent tile. Consequently, however, it then becomes necessary to make special arrangements for the edges of the solar collector assemblies to cooperate with the adjacent edges presented by the roof tiles.

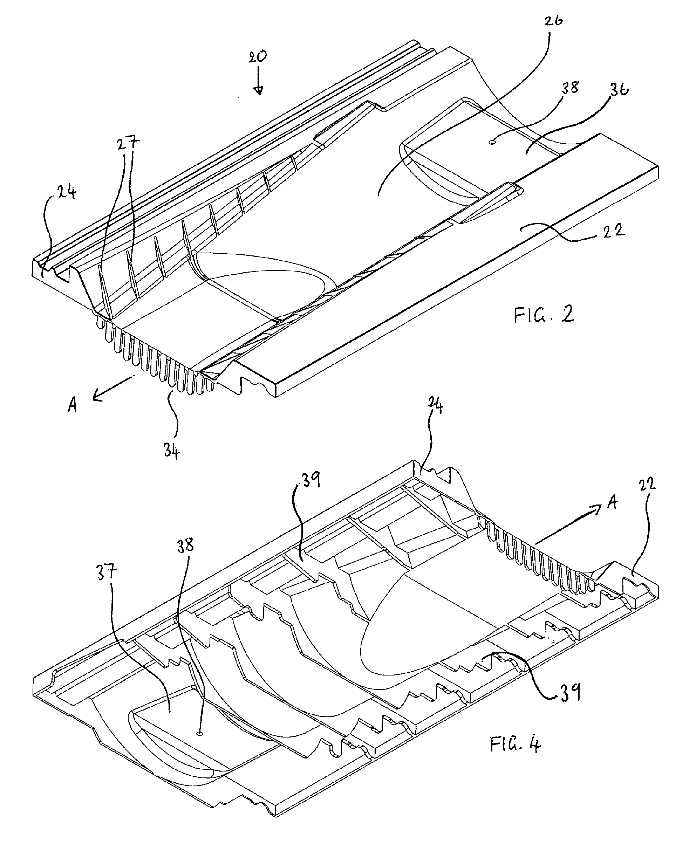

As shown in Figure 2, therefore, the present invention provides a specially shaped adaptor 20 which has an "overlapping" flange 22 along one side edge, and an "underlapping" flange 24 extending along the opposite side edge. The adaptor 20 can, optionally, be positioned at the right hand end of a solar collector assembly as shown in Figure 1, in which case the underlapping flange 24 cooperates or mates with the overlapping flange 12 of the adjacent solar collector. Alternatively, the adaptor can be positioned at the left hand end of the assembly, where its overlapping flange 22 will overly the corresponding "underlapping" flange at the left hand end of the solar collector.

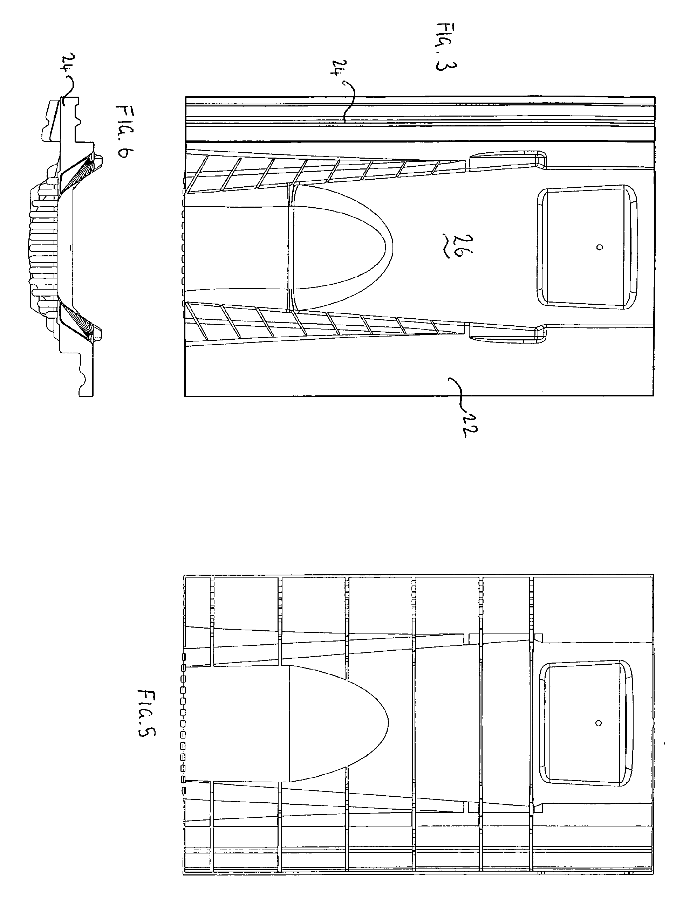

The central region of the adaptor 20 comprises a shallow part conical depression 26 on one side as shown in Figure 2, and a corresponding convex surface on the underside as seen in Figures 4 and 5. The adaptor is a relatively thin shell structure made from a moulded material such as a plastics material, clay, or other construction material. The shallow depression 26 is sloped downwards so as to prevent water build-up when the adaptor 20 is installed on a roof. Ribs 27 formed in a wall of the depression 26 are also angled downwards to prevent water build-up.

As shown in Figure 4, the convex surface on the underside of the adaptor 20 includes a recess or channel 37 to enable the adaptor 20 to sit on a roof batten (not shown) installed on a roof. A fixing hole 38 formed in the channel 37 extends through to the upper side of the adaptor 20. The adaptor 20 can be fixed to the batten (not shown) via the hole 38, for example by using a screw or other fastening means. An outer side edge of the underlapping flange 24 is profiled so that the entire face of the channel 37 can contact the batten (not shown) when fixed thereto.

Strengthening ribs 39 are formed on underside of the adaptor 20. The ribs 39 extend from the convex surface on the underside to respective side flanges 22, 24 in a direction perpendicular to the pitch direction of the roof. The ribs 39 are shaped so as not to obstruct mating of the overlapping flange 22 with the corresponding underlapping flange of the solar collector.

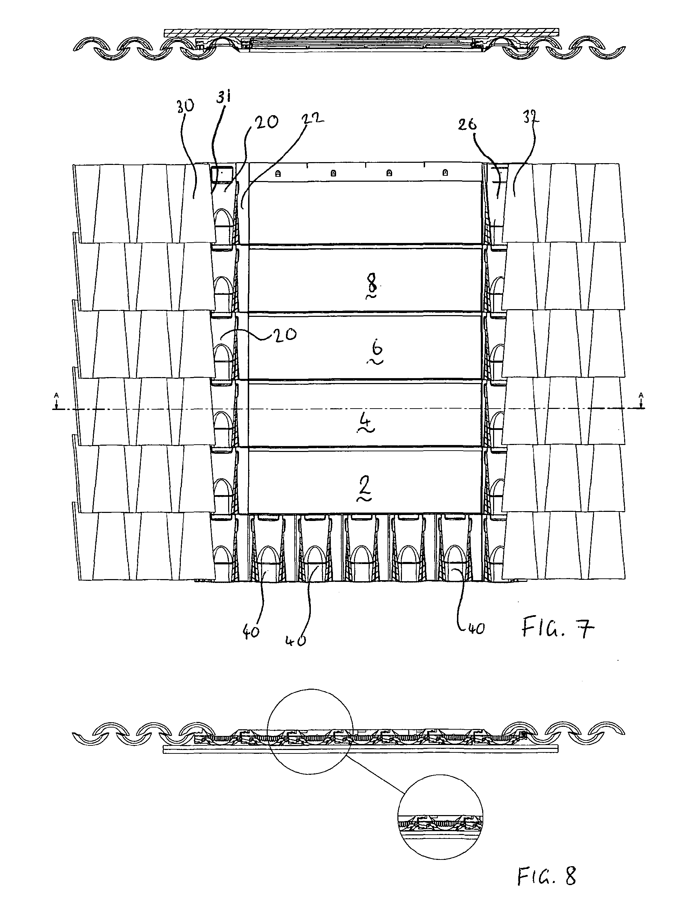

The arrangement of the roof in the assembled condition is shown in more detail in Figures 7 to 10. Figure 7 illustrates how the adaptors 20 overlap the adjacent edges of solar collectors 2, 4, 6, 8 at the left hand side, and are in turn, on their opposite sides, overlapped by adjacent "hill" tiles 30, whose adjacent edges 31 fit into the central of depression 26 of each adaptor. Similarly the "underlapping" adaptors on the right-hand side of the collector array are overlapped by adjacent tiles 32.

In order for the adaptors 20 to cooperate in a weatherproof manner with each other when they are arranged in an upwardly extending line as shown, the lower edge is provided with a downwardly dependent, toothed flange 34 (Figure 2) which can engage against an abutment 36 (Figure 2) formed near the upper edge of the next, lower adaptor when they are overlapped in the normal way. The spacing between adjacent teeth of the toothed flange 34 can be selected so as to prevent rodents, insects and the like which are larger than the spacing from nesting under the roof tiles. In general, the toothed flange 34 is removed prior to attaching an adaptor 20 to the flanged upper edge 10 of the solar energy collector so as not to interfere with either the positioning of the adaptor 20 on the upper edge 10, or the weatherproofing of the solar collector module 1. If the adaptor 20 is made of clay, then the toothed flange 34 may comprise a sheet of material or membrane which is cut, for example by using pliers, to provide the toothed projection.

Similarly, at the lower edge of the collector assembly, a row of adaptors 40 (Figure 7) can be arranged with their upper edges underneath the lower edge of collector 2, and their adjacent edge flanges 22, 24 engaging each other as shown in Figure 10.

Although not shown, it will also be appreciated that a further horizontal line of adaptors can be arranged along the top edge of the assembly so as to overlap the flange 10 of the uppermost collector assembly, while providing a "seating" for the next row of tiles above the assembly. In this case, the toothed flange 34 will be removed.

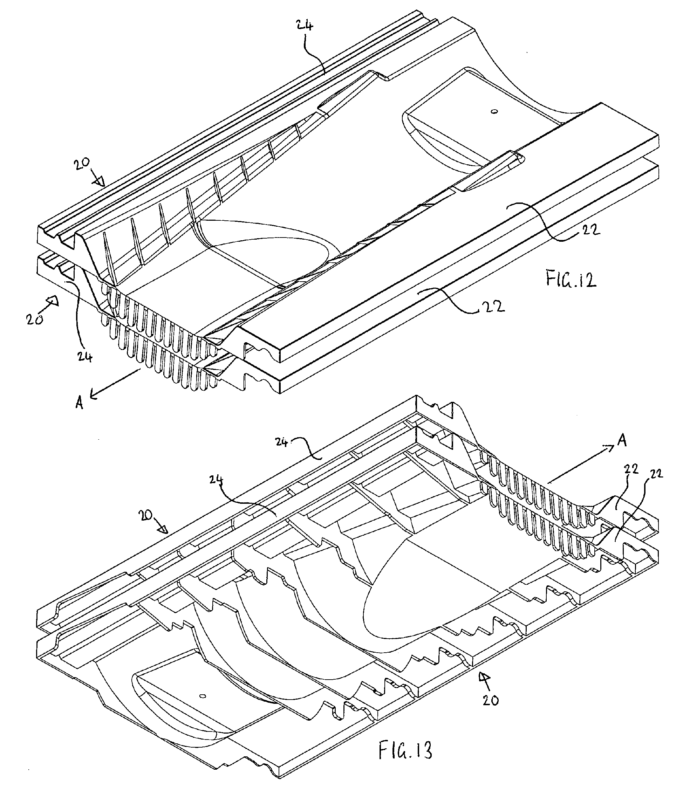

Referring to Figures 12 and 13, a stack of two adaptors 20 is shown. It will be appreciated that the concave and convex surfaces on respective upper and lower sides of the adaptors 20 cooperate to enable multiple adaptors 20 to be closely stacked on top of each other. This, of course, is advantageous in terms of transporting large numbers of adaptors 20.

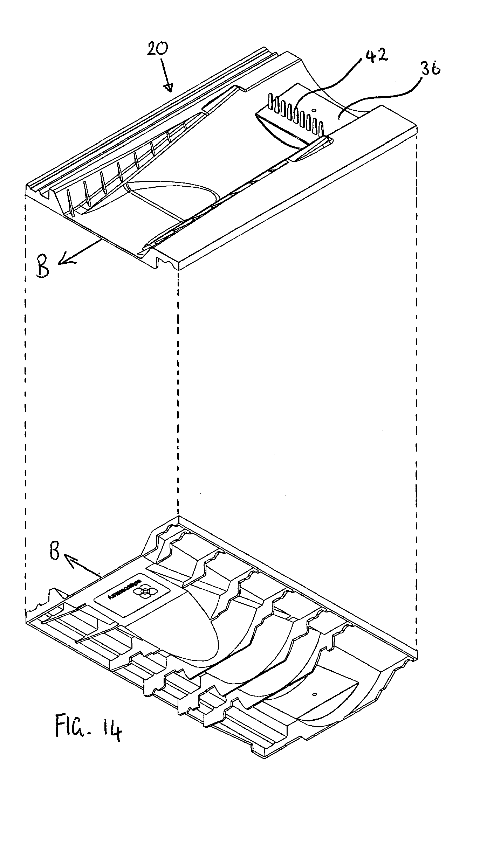

Referring to Figure 14, an adaptor 20 having upwardly projecting teeth is shown. Instead of, or in addition to, the lower edge of the adaptor 20 being provided with the downwardly dependent, toothed flange 34 (Figure 2) which can engage against the abutment 36 (Figure 2), the adaptor 20 can be provided with upwardly projecting teeth 42, also referred to as an upwardly projecting toothed flange 42. The upwardly projecting teeth 42 project from an upper face of the abutment 36. When the adaptor 20 is installed around one or more solar energy collectors 2, 4, 6, 8, the teeth 42 of adaptors 20 installed on lateral edges of the collectors 2, 4, 6, 8 engage against the lower edge of the next, higher adaptor 20, when they are overlapped in the normal way. Furthermore, the teeth 42 engage against a lower edge of the lowermost collector 2 when the adaptor 20 is installed on the bottom edge of the collector 2. The teeth 42 may be removed, for example, if the adaptor is installed on the upper edge of the uppermost collector.

A solar energy module 1 is installed on the roof by securing at least one solar energy collector 2, 4, 6, 8 to the roof and mating at least one adaptor 20 with a corresponding edge of the solar energy collector 2, 4, 6, 8. In general, adaptors 20 will be provided around the entire edge of the at least one solar energy collector 2, 4, 6, 8 so as to provide a weather-proof installation. Tiles can then be installed in adjacent positions with the edges in the concave surfaces 26 of the mated adaptors 20 as explained above. The tiles can be secured to the adaptors by, for example, cement to provide a weather-tight seal.

## Claims

1. A mounting adaptor for a solar thermal collector of the type which is designed to be substituted for a roof tile or tiles, the adaptor comprising an interlocking rectangular body whose dimension in the direction of a roof pitch corresponds to a pitch dimension of the roof tile, the body being provided with complementary flanges on its opposite lateral side edges adapted to mate with corresponding flanges on opposite side edges of the solar thermal collector, or on another similar adaptor, and also incorporating a central recessed region adapted to receive the downwardly dependent edge of an adjacent non-flanged type of roof tile so as to form a weather-tight bridge between the tile and the collector.

2. An adaptor according to claim 1 wherein the flanges correspond to the side flanges of a solar thermal collector.

3. An adaptor according to claim 1 or claim 2 wherein the central recessed region is suitably shaped to receive the edge of a non-flanged tile of part-cylindrical or part-conical cross-section.

4. An adaptor according to any preceding claim wherein an underside of the adaptor comprises a channel adapted to receive a roof batten.

5. An adaptor according to claim 4 wherein at least one side flange of the adaptor is profiled to allow the channel to contact the roof batten along its entire face.

6. An adaptor according to any preceding claim further comprising a downwardly dependent toothed flange at one end.

7. An adaptor according to any preceding claim further comprising an upwardly projecting toothed flange.

8. An adaptor according to claim 6 or 7 wherein the toothed flange is removable.

9. An adaptor according to any preceding claim further comprising ribs formed on an underside thereof.

10. A solar thermal collector module comprising a solar thermal collector and an adaptor according to any preceding claim.

11. A method of installing a solar thermal collector module on a pitched roof comprising installing a solar thermal collector on the roof and mating at least one adaptor according to any proceeding claim therewith.

12. A method according to claim 11 comprising mating an adaptor with one lateral edge of the solar thermal collector and mating an identical adaptor with another lateral edge of the solar thermal collector.

13. A method according to claim 12 comprising providing another identical adaptor at an upper or lower edge of the solar thermal collector.

14. A method according to any one of claims 11 to 13 comprising removing a toothed flange of the adaptor prior to mating the adaptor with an edge of the solar thermal collector.
